# EUROPEAN PATENT APPLICATION

(11) **EP 4 775 094 A1**
(43) Date of publication of application: **15.07.2026**
(21) Application number: 23951283.3
(22) Date of filing: 20.10.2023
(51) Int. Cl.: A47C 7/40, A47C 7/46, A47C 7/62, A47C 7/00

(54) **CHAIR AND TRAY HAVING SEAT-BACK LINKAGE FUNCTION**

(30) Priority: 05.09.2023 CN 202311141862
(71) Applicant: Henglin Home Furnishings Co., Ltd., Huzhou, Zhejiang 313000 (CN)
(72) Inventor: WANG, Jianglin, Huzhou, Zhejiang 313000 (CN); BAO, Jiahua, Huzhou, Zhejiang 313000 (CN); JIN, Jian, Huzhou, Zhejiang 313000 (CN); LI, Decai, Huzhou, Zhejiang 313000 (CN)
(74) Representative: Cabinet Chaillot
(86) International application number: PCT/CN2023/125529
(87) International publication number: WO 2025/050467

(57) **Abstract**

Provided is a chair and a tray having a seat-back linkage function. The tray includes a base, a tailstock, a top seat, first connecting members, and toothed plates. Outer teeth arranged in a fan shape are provided protruding from a side surface of each toothed plate. Outer teeth arranged in a fan shape are provided on a side surface of each first connecting member. The tailstock and the base are located below the top seat. The first connecting member is hingedly connected to the top seat. The first connecting members are hingedly connected to the tailstock. The tailstock is hingedly connected to the base by means of a third connecting shaft. A front part of the base is movably connected to a front part of the top seat. The toothed plates are fixedly arranged on the base. The outer teeth of each toothed plate are meshed with the outer teeth of the corresponding first connecting member. The central axis of the outer teeth arranged in a fan shape on each toothed plate coincides with the axis of the third connecting shaft. The central axis of the outer teeth arranged in a fan shape on each first connecting member coincides with the axis of a second connecting shaft. In this way, the meshing position of each first connecting member and the corresponding toothed plate can be adjusted to change the initial state of the tray during assembly of the tray, and linkage between the top seat and the tailstock is adjusted, thereby improving the universality of the tray.

## Description

### TECHNICAL FIELD

The present disclosure relates to the field of seats, and in particular to a chair and a tray having a seat-back linkage function.

### BACKGROUND

Chairs are one of the indispensable items in daily life. With improvements in living standards, people's demand for chair comfort is increasing. Therefore, functional chairs with synchronous seat-back linkage have emerged. A seat and a back operate synchronously during reclining, thereby improving the comfort of use.

The patent document numbered CN115413901A discloses a base device for an ergonomic chair, including: a base; a rocker, which is configured to connect a back; a seat connecting member, which is configured to connect a seat, in which a synchronization pin is connected between a rear end of the seat connecting member and the rocker; and a sinking guide mechanism, which includes an oblique guide groove arranged on the base and a guide rod arranged on the seat connecting member. Specifically, a front end of the seat connecting member moves with the rocker to make the guide rod slide along the oblique guide groove; in the initial state, the seat connecting member is in a horizontal state, and the guide rod is located at a front upper end of the oblique guide groove; in the backward reclining state, the rocker follows the back to recline backward and drives the rear end of the seat connecting member to move downward and backward; the front end of the seat connecting member slides backward and downward along the oblique guide groove; the seat connecting member as a whole sinks relative to the base and moves backward; and the seat connecting member moves to a tilted state with the front end high and the rear end low, so that the seat tilts following the seat connecting member, making a front end of the seat tilt upward.

In the prior art, since the seat and the back are connected by a rocker, during the seat-back linkage, a tilt angle of the seat is closely limited by a swing angle of the back, so the change in the seat angle is relatively small. If a greater seat depth is required in a chair, the swing angle of the back needs to be further increased.

### SUMMARY

In order to solve the problem of the small change in chair seat depth during seat-back linkage in the prior art, the purpose of the present disclosure is to provide a chair and a tray having a seat-back linkage function, so that the adjustable range of the seat tilt angle can be larger and the adjustment speed of the seat tilt angle can be higher.

To achieve the above purpose, the present disclosure provides a tray having a seat-back linkage function, including a base for installing chair legs, a tailstock for installing a back, and a top seat for installing a seat, in which the tray further includes first connecting members and toothed plates, a side surface of each of the toothed plates is provided with outer teeth protruding therefrom, and the outer teeth on each of the toothed plates are arranged in a fan shape; and a side surface of each of the first connecting members is provided with outer teeth, and the outer teeth on each of the first connecting member are arranged in a fan shape; the tailstock and the base are located below the top seat; the first connecting members are hingedly connected to the top seat through a first connecting shaft; the first connecting members are hingedly connected to the tailstock through a second connecting shaft; the tailstock is hingedly connected to the base through a third connecting shaft; a front part of the base is movably connected to a front part of the top seat; the toothed plates are fixedly connected or integrally formed on the base; the outer teeth of the toothed plates are meshed with the outer teeth of the first connecting members; a central axis of the outer teeth arranged in a fan shape on each of the toothed plates coincides with an axis of the third connecting shaft, and a central axis of the outer teeth arranged in a fan shape on each of the first connecting members coincides with an axis of the second connecting shaft; and when a rear part of the tailstock swings downward, the tailstock drives the second connecting shaft to swing downward around the third connecting shaft, and the second connecting shaft pulls a rear part of the top seat to sink through the first connecting members, in which, since the first connecting members and the toothed plates are connected by outer tooth meshing, the first connecting members rotate around the second connecting shaft, and the first connecting members drive the tailstock to move through the first connecting shaft.

Preferably, the two first connecting members are respectively arranged on two sides of the base, and the two first connecting members are arranged on the same first connecting shaft.

Preferably, the two toothed plates are respectively arranged on the two sides of the base, and the two toothed plates are arranged on the same third connecting shaft and fixedly connected to the base.

Preferably, the toothed plates are arranged on a front side of the first connecting members.

Preferably, the tray further includes a second connecting member. The second connecting member is located at a front side of each of the first connecting members and the tailstock; a lower end of the second connecting member is hingedly connected to the base through a fourth connecting shaft; and an upper end of the second connecting member is hingedly connected to the top seat through a fifth connecting shaft.

Preferably, a sliding hole is provided on the top seat. The fifth connecting shaft is installed on the base. The fifth connecting shaft passes through the sliding hole and can move within the sliding hole.

Preferably, a limit shaft is installed on the base, and the limit shaft is located below a front part of the tailstock.

Preferably, the tray further includes an elastic member, in which two ends of the elastic member are respectively connected to two of the base, the top seat, and the tailstock.

Preferably, the elastic member includes a spring.

The present disclosure provides a chair, including the above-mentioned tray having a seat-back linkage function.

The beneficial effects of the technical solution of the present disclosure are as follows: in the preceding solution, the tooth meshing of the first connecting members and the toothed plates can better limit the angle of the top seat, making the process of the first connecting members rotating around the second connecting shaft more stable; in addition, the first connecting members can perform a synchronous operation independently of the tailstock, and the sinking distance of the first connecting members and the sinking distance of the second connecting shaft can both act on the top seat, thereby increasing the adjustable range and the adjustment speed of the angle of the top seat. The tray has stronger versatility. When chairs of different styles and functions are manufactured, the meshing position of the first connecting members on the toothed plates can be pre-adjusted during the assembly process of the tray, thereby adjusting the initial state of the tray and adjusting the linkage path of the top seat and the tailstock. As a result, the difficulty of chair design and manufacturing is reduced, and the manufacturing accuracy and the production cost of the tray are lowered.

### BRIEF DESCRIPTION OF DRAWINGS

FIG. 1 is a schematic diagram of the structure of a tray in Embodiment 1;
FIG. 2 is a schematic diagram of the structure of a tray after a top seat is removed in Embodiment 1;
FIG. 3 is a schematic diagram of the structure of a tray in Embodiment 2;
FIG. 4 is a schematic diagram of the structure of a tray after a top seat is removed in Embodiment 2;
FIG. 5 is a schematic diagram of the structure of a tray in Embodiment 3;
FIG. 6 is a schematic diagram of the structure of a tray after a top seat is removed in Embodiment 3;
FIG. 7 is a schematic diagram of the structure of a tray before a tailstock swings in Embodiment 3; and
FIG. 8 is a schematic diagram of the structure of a tray after a tailstock swings in Embodiment 3.

Reference numerals: 1. base; 11. third connecting part; 2. tailstock; 21. first connecting plate; 22. second connecting plate; 3. top seat; 31. first connecting part; 32. second connecting part; 33. sliding hole; 4. first connecting member; 5. second connecting member; 51. fourth connecting part; 6. toothed plate; 7. elastic member; 71. spring; 72. first mounting base; 73. second mounting base; 81. first connecting shaft; 82. second connecting shaft; 83. third connecting shaft; 84. fourth connecting shaft; 85. fifth connecting shaft; 86. sixth connecting shaft; 87. limit shaft.

### DETAILED DESCRIPTION OF THE EMBODIMENTS

Embodiments of the present disclosure are described in detail below, examples of which are shown in the accompanying drawings, and identical or similar reference numerals throughout designate identical or similar elements or elements having identical or similar functions. The embodiments described below by reference to the accompanying drawings are exemplary and intended for use in explaining the present disclosure, and shall not be construed as limiting the present disclosure.

In the description of the present disclosure, it needs to be understood that the azimuth or position relationships indicated by the terms "central", "longitudinal", "transverse", "length", "width", "thickness", "upper", "lower", "front", "rear", "left", "right", "vertical", "horizontal", "top", "bottom", "inside", "clockwise" and "counterclockwise" are based on those shown in the drawings. It is only for convenience of description and simplification of the present disclosure, not to indicate or imply that the referred devices or components must have a specific orientation, be constructed and operate in a specific orientation, and thus cannot be understood as limiting the present disclosure.

Furthermore, the terms "first" and "second" are used merely for illustrative purposes and shall not be construed as indicating or implying relative importance or as implicitly specifying the number of technical features indicated. Thus, the features defined with the terms "first" and "second" may explicitly or implicitly include one or more of these features. Unless otherwise specifically defined, "a plurality of" means two or more in the description of the present disclosure.

In the present disclosure, unless otherwise specified or restricted, the terms of "installation", "interconnection", "connection" and "fixing" shall be understood as a general sense. For example, the connection can be fixed connection, removable connection, integrated connection, mechanical connection, electrical connection, direct connection, indirect connection through intermediate media or linkage between two components. For those of ordinary skill in the art, understanding of the specific meanings of the above terms in the present disclosure can be acquired according to specific situations.

In the present disclosure, unless otherwise explicitly specified and restricted, "a first feature above or below a second feature" may include "direct contact between the first feature and the second feature", and may also include that "the first feature and the second feature are not in direct contact but they are in contact through other feature(s) between them". Besides, the first feature "above", "on top of" and "onto" the second feature includes that the first feature is directly above and obliquely above the second feature, or simply indicates that the first feature is higher in the level than the second feature. The first feature "below", "at the bottom of" and "underneath" the second feature includes that the first feature is directly below and obliquely below the second feature, or simply means that the first feature is lower in the level than the second feature.

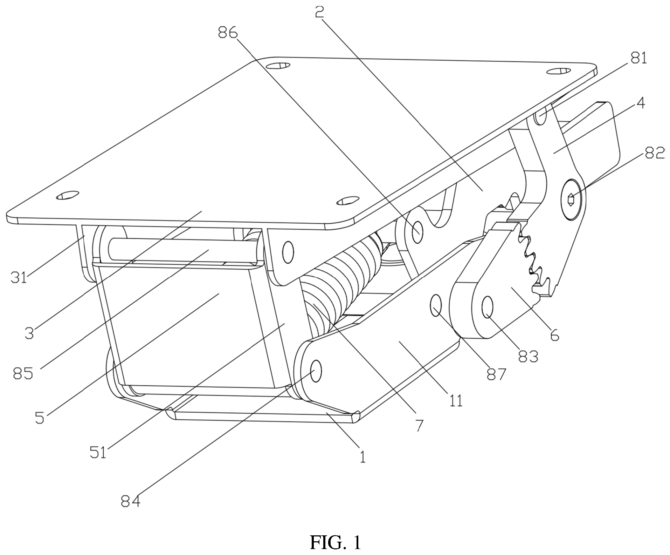

The orientation described in the following embodiments is based on the orientation position shown in FIG. 1. In FIG. 1, the position of the top seat is defined as the upper side, the position of the base is defined as the lower side, and the position of the tailstock is defined as the rear side, with left and right being defined relative to the upper and lower sides.

### Embodiment 1

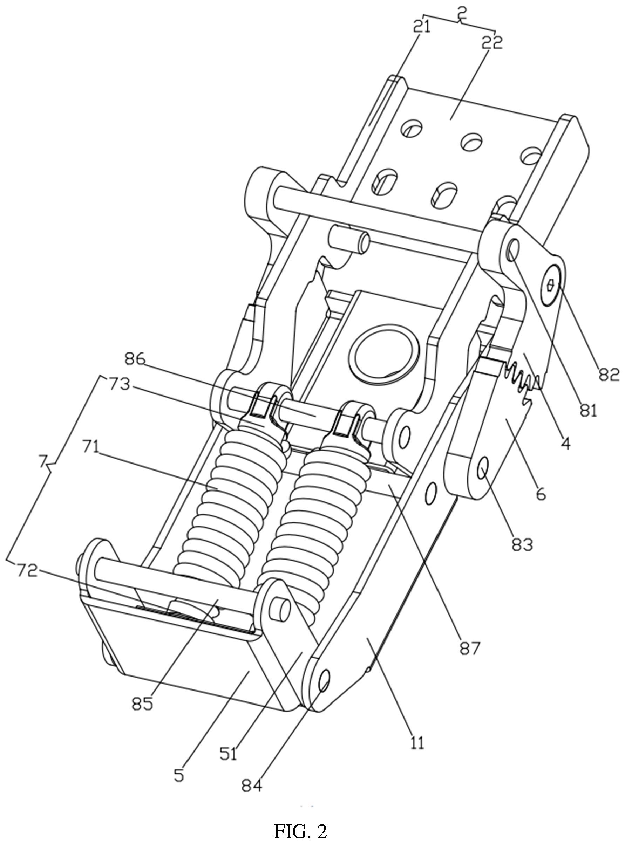

The tray shown in FIG. 1 and FIG. 2 includes a base 1, a tailstock 2, and a top seat 3, and further includes first connecting members 4, a second connecting member 5, toothed plates 6, and an elastic member 7. The first connecting members 4 are located at a rear side of the second connecting member 5; the first connecting members 4 are hingedly connected to the top seat 3 through a first connecting shaft 81; the first connecting members 4 are hingedly connected the tailstock 2 through a second connecting shaft 82; and the tailstock 2 is hingedly connected to the base 1 through a third connecting shaft 83. One end of the second connecting member 5 is hingedly connected to the base 1 through a fourth connecting shaft 84, and the other end of the second connecting member 5 is hingedly connected to the top seat 3 through a fifth connecting shaft 85. The first connecting shaft 81 is located above the second connecting shaft 82; the fifth connecting shaft 85 is located above the fourth connecting shaft 84; and the third connecting shaft 83 is located between the second connecting shaft 82 and the fourth connecting shaft 84. Two ends of the elastic member 7 are respectively connected to the tailstock 2 and the base 1, and the toothed plates 6 are fixedly connected or integrally formed on the base 1.

In this way, when a rear part of the tailstock 2 swings downward, a rear part of the top seat 3 can be pulled to swing backward and downward by the first connecting members 4, and a front part of the top seat 3 pulls the second connecting member 5 to swing around the fourth connecting shaft 84. Specifically, when the first connecting members 4 swing, since the first connecting members 4 and the toothed plates 6 are pressed against each other, the toothed plates 6 drive the first connecting members 4 to rotate around the second connecting shaft 82 through segments of outer teeth. When the first connecting members 4 rotate around the second connecting shaft 82, the sinking speed of the rear part of the top seat 3 is increased, so that the top seat 3 can get a greater tilt angle and the user can get a better use experience.

During the assembly process of the tray, outer teeth at different positions on the toothed plates are meshed with the first connecting members, thereby adjusting the initial state of the tray and adjusting the linkage path of the top seat and the tailstock. As a result, the manufacturing accuracy and the production cost of the tray are lowered. Moreover, since the initial positions of the top seat and the tailstock are adjustable, the tray can be suitable for chairs of different styles, and the versatility of the tray is enhanced.

In order to make the movement and the support of the top seat 3 more stable, in this embodiment, a side surface of each of the toothed plates 6 is provided with outer teeth protruding therefrom, and the outer teeth on each of the toothed plates 6 are arranged in a fan shape; and a side surface of each of the first connecting members 4 is provided with outer teeth, and the outer teeth on each of the first connecting member 4 are arranged in a fan shape; and the first connecting members 4 and the toothed plates 6 are connected by outer tooth meshing. In this way, the linkage process of the tailstock 2 and the top seat 3 is more stable. Further preferably, a central axis of the outer teeth arranged in a fan shape on each of the toothed plates 6 coincides with an axis of the third connecting shaft 83, and a central axis of the outer teeth on each of the first connecting members 4 coincides with an axis of the second connecting shaft 82. In this way, the structure of the tray is simpler and more compact.

In order to make the structure of the tray more compact, in this embodiment, two first connecting parts 31 protrude downward from a bottom part of the top seat 3; left and right sides of the base 1 are bent upward to form third connecting parts 11; and left and right ends of the second connecting member 5 are bent backward to form fourth connecting parts 51. An upper part of the fourth connecting parts 51 is inserted from front to rear between the two first connecting parts 31, and the fourth connecting parts 51 are hingedly connected to the first connecting parts 31 through the fifth connecting shaft 85. A lower part of the fourth connecting parts 51 is inserted from front to rear between the two third connecting parts 11, and the fourth connecting parts 51 are hingedly connected to the third connecting parts 11 through the fourth connecting shaft 84. Further, the tailstock 2 includes two first connecting plates 21 arranged on left and right sides; the two first connecting plates 21 are fixedly connected by a second connecting plate 22; the first connecting plates 21 are inserted from rear to front between the two third connecting parts 11 of the base 1; and the first connecting plates 21 are hingedly connected to the third connecting parts 11 of the base 1 through the third connecting shaft 83.

Further preferably, the spacing between the two first connecting parts 31 is the same as the spacing between the two third connecting parts 11, and the spacing between the two first connecting plates 21 is the same as the spacing between the two fourth connecting parts 51.

In order to provide balance for the top seat 3, in this embodiment, two first connecting members 4 are provided, and the third connecting parts 11 and the first connecting parts 31 are both located between the two first connecting members 4; and two toothed plates 6 are provided, and the two toothed plates 6 are respectively arranged on left and right sides of the base 1. The toothed plates 6 and the first connecting members 4 are arranged in a one-to-one correspondence.

In order to facilitate the installation of the toothed plates 6, in this embodiment, the third connecting shaft 83 is installed on the base 1; the tailstock 2 is sleeved on the third connecting shaft 83; the toothed plates 6 are installed on the third connecting shaft 83; and the toothed plates 6 are fixed to the base 1 by welding.

In order to improve the consistency of movement of the two first connecting members 4, in this embodiment, the first connecting shaft 81 transversely passes through the two first connecting parts 31 of the top seat 3, and the two first connecting members 4 are respectively fixedly installed on both ends of the first connecting shaft 81. The third connecting shaft 83 transversely passes through the two third connecting parts 11 of the base 1, and the two toothed plates 6 are respectively installed on both ends of the third connecting shaft 83. In this way, the two first connecting members 4 can move synchronously and increase the smoothness of the tray movement. Further preferably, both the fourth connecting shaft 84 and the fifth connecting shaft 85 transversely pass through the first connecting parts 31 and the fourth connecting parts 51.

In order to ensure that the elastic member 7 has sufficient elastic force, in this embodiment, a limit shaft 87 is fixed on the base 1. The limit shaft 87 is located between the third connecting shaft 83 and the fourth connecting shaft 84. The limit shaft 87 is located below a front end of the tailstock 2. In this way, the lowest position of the front end of the tailstock 2 is limited by the limit shaft 87, and the elastic member 7 is ensured to have sufficient tension to reset the tailstock 2.

In this embodiment, the elastic member 7 includes a spring 71, a first mounting base 72, and a second mounting base 73. The first mounting base 72 and the second mounting base 73 are respectively arranged on both ends of the spring 71. The first mounting base 72 is arranged on the fourth connecting shaft 84 at the front end of the base 1, and the second mounting base 73 is sleeved on the sixth connecting shaft 86 at a front part of the tailstock 2. Further preferably, two springs 71 are provided, and both springs 71 are provided with first mounting bases 72 and second mounting bases 73, in which the two first mounting bases 72 are integrally formed. In this way, the movement process of the tailstock 2 is made more stable by two sets of springs 71, and more tension can be provided to ensure the consistency of the reciprocating movement of the tray. In other embodiments, the spring 71 can also be a tension spring.

A chair, which includes the above-mentioned tray, further includes a seat, a back, and a leg. The leg is installed on the base 1; the back is installed on the tailstock 2; and the seat is installed on the top seat 3.

The linkage process of the tailstock 2 and the top seat 3 is as follows: A top part of the back swings backward, and the back drives the tailstock 2 to rotate around the third connecting shaft 83. A rear end of the tailstock 2 sinks, and the front part of the tailstock 2 tilts upward. The spring 71 is stretched by the pulling force from the tailstock 2. The tailstock 2 pulls the rear part of the top seat 3 to sink through the first connecting members 4, and the front part of the top seat 3 pulls a top part of the second connecting member 5 to make the second connecting member 5 rotate around the fourth connecting shaft 84. During the sinking process of the first connecting members 4, since the tailstock 2 rotates with the third connecting shaft 83 as the rotation center, the tailstock 2 drives the second connecting shaft 82 to rotate around the third connecting shaft 83, and since the first connecting members 4 and the toothed plates 6 are connected by outer tooth meshing, the toothed plates 6 can rotate the first connecting members 4 with the second connecting shaft 82 as the rotation center through the outer teeth, thereby increasing the sinking speed of the rear part of the top seat 3.

The reset process of the tailstock 2 is as follows: The spring 71 pulls the sixth connecting shaft 86, so that the sixth connecting shaft 86 pulls the front end of the tailstock 2 to swing downward. The tailstock 2 rotates with the third connecting shaft 83 as the rotation center. The rear part of the tailstock 2 drives the second connecting shaft 82 and the first connecting members 4 to swing upward. Since the first connecting members 4 and the toothed plates 6 are connected by outer tooth meshing, during the process of the second connecting shaft 82 rotating around the third connecting shaft 83, the first connecting members 4 rotate with the second connecting shaft 82 as the rotation center and increase the speed at which the rear part of the top seat 3 tilts upward. The first connecting shaft 81 pushes the rear part of the top seat 3 to tilt upward, and the top seat 3 pushes the second connecting member 5 through the fifth connecting shaft 82, so that the second connecting member 5 rotates with the fourth connecting shaft 84 as the rotation center until the tray is reset.

### Embodiment 2

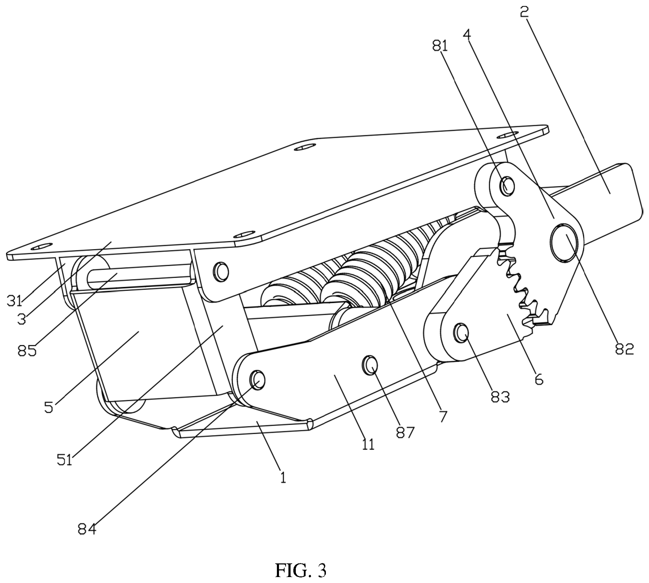

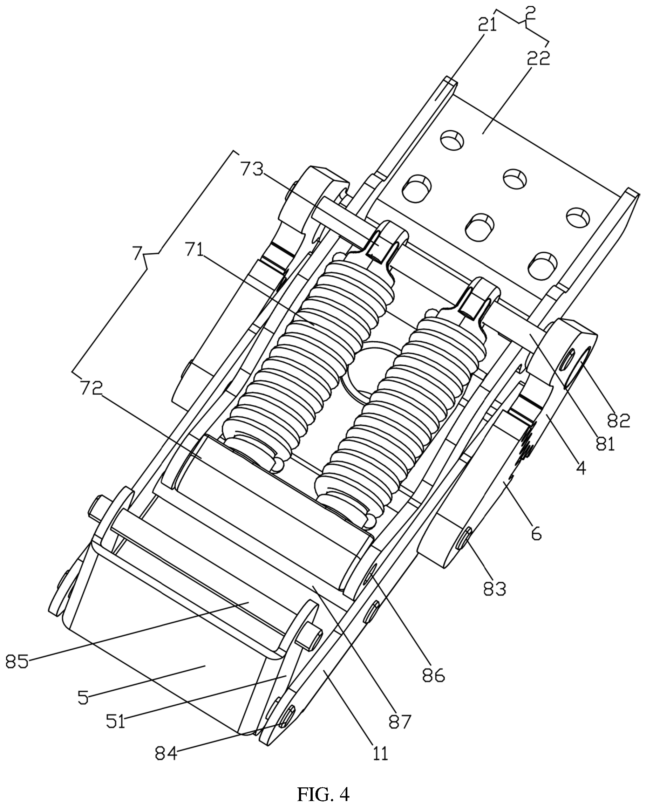

Different from Embodiment 1, as shown in FIG. 3 and FIG. 4, in this embodiment, two ends of an elastic member 7 are respectively connected to a first connecting shaft 81 and a third connecting shaft 83. A first mounting base 72 is arranged on a third connecting shaft 83 at a front part of the base 1, and a second mounting base 73 is sleeved on a first connecting shaft 81 at a front part of a tailstock 2.

In this embodiment, the linkage process of the tailstock 2 and a top seat 3 is as follows: A top part of a back swings backward, and the back drives the tailstock 2 to rotate around the third connecting shaft 83. A rear end of the tailstock 2 sinks, and a front end of the tailstock 2 tilts upward. The tailstock 2 pulls a rear end of the top seat 3 to sink through first connecting members 4 and the first connecting shaft 81, and a front end of the top seat 3 pulls a top part of a second connecting member 5 to make the second connecting member 5 rotate around a fourth connecting shaft 84. During the sinking process of the first connecting members 4, since the tailstock 2 rotates with the third connecting shaft 83 as the rotation center, the tailstock 2 drives a second connecting shaft 82 to rotate around the third connecting shaft 83, and since the first connecting members 4 and toothed plates 6 are connected by outer tooth meshing, the toothed plates 6 can rotate the first connecting members 4 with the second connecting shaft 82 as the rotation center through outer teeth, thereby accelerating the sinking speed of the rear part of the top seat 3. As a result, a spring 71 is stretched by the pulling force from the first connecting shaft 81.

In this embodiment, the reset process of the tailstock 2 is as follows: The spring 71 pulls the first connecting shaft 81 to swing upward, and the first connecting shaft 81 pulls the top seat 3 and the first connecting members 4 to swing upward synchronously. The first connecting members 4 pull the tailstock 2 through the second connecting shaft 82, so that the tailstock 2 rotates with the third connecting shaft 83 as the rotation center. The toothed plates 6 rotate the first connecting members 4 with the second connecting shaft 82 as the rotation center through the outer teeth, and the speed at which the top seat 3 is reset is increased until a tray is completely reset.

In this way, during the movement of the tray, the pulling force on the spring 71 is generated by the rotation of the first connecting members 4 around the second connecting shaft 82.

### Embodiment 3

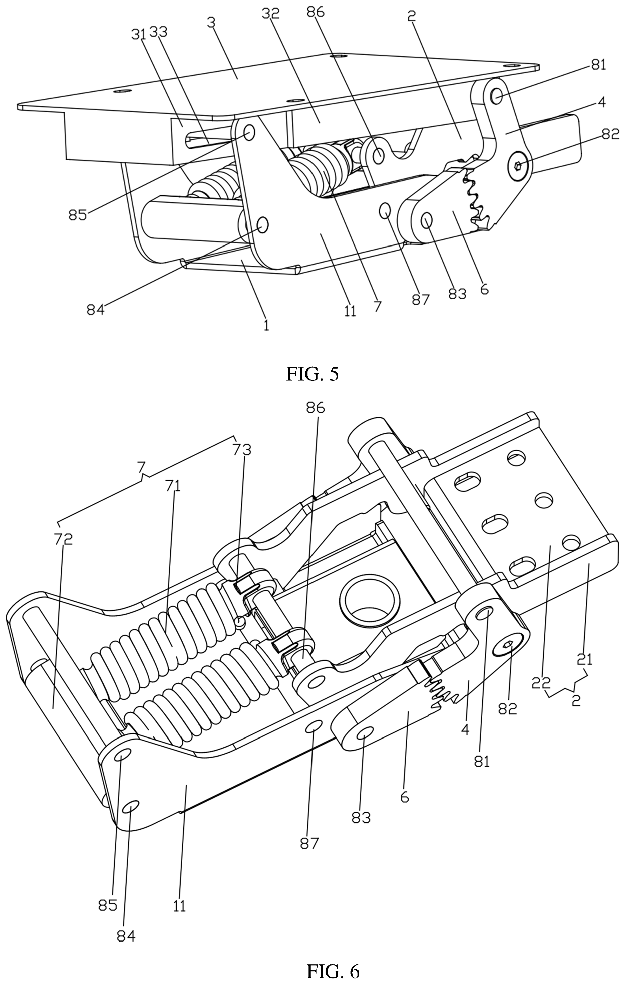

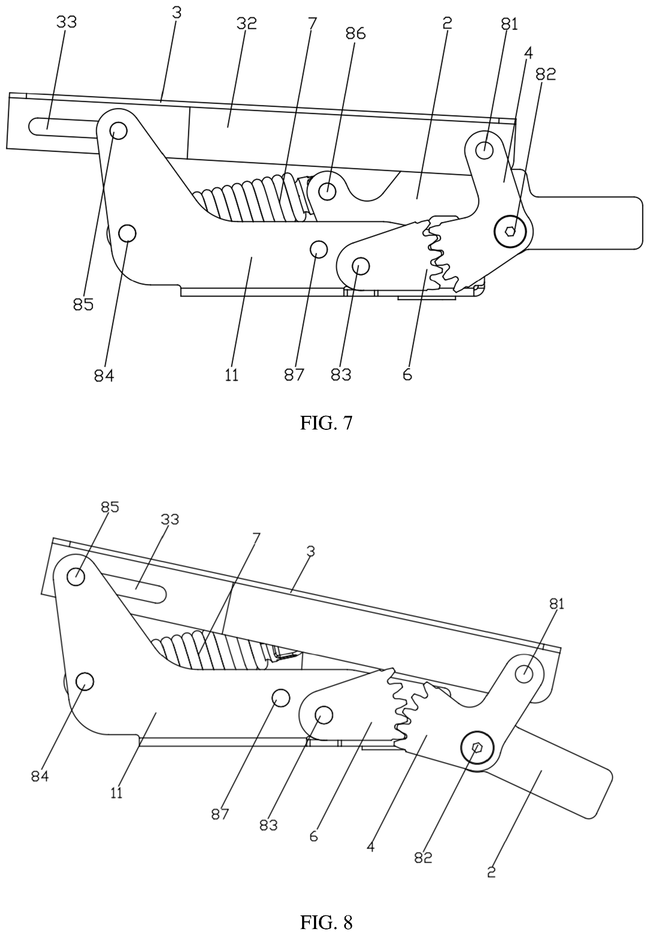

Different from Embodiment 1, as shown in FIG. 5 to FIG. 8, in this embodiment, a top seat 3 and a base 1 are slidably connected through a fourth connecting shaft 84. Specifically, the spacing between two first connecting parts 31 on the top seat 3 is smaller than the spacing between two third connecting parts 11 on the base 1. A front part of each of the third connecting parts 11 tilts upward to form a limiting part, and the first connecting parts 31 are inserted from upper to lower between the two limiting parts. The first connecting parts 31 are separately provided with sliding holes 33, and the fourth connecting shaft 84 and a fifth connecting shaft 85 pass through the limiting part. The fifth connecting shaft 85 transversely extends and passes through the two sliding holes 33.

In this way, a front part of the top seat 3 tilts to a greater extent while a movement trajectory of a rear part of the top seat 3 remains unchanged.

In this embodiment, two second connecting parts 32 protrude from a bottom part of the top seat 3, and the spacing between the two second connecting parts 32 is the same as the spacing between the two third connecting parts 11. The second connecting parts 32 are located above the third connecting parts 11, and first connecting members 4 are hingedly connected to the second connecting parts 32 through a first connecting shaft 81. The first connecting parts 31 and the second connecting parts 32 are fixedly connected.

In this embodiment, the linkage process of a tailstock 2 and the top seat 3 is as follows: A top part of a back swings backward, and the back drives the tailstock 2 to rotate around a third connecting shaft 83. A rear part of the tailstock 2 sinks, and the front part of the tailstock 2 tilts upward. A spring 71 is stretched by the pulling force from the tailstock 2. The tailstock 2 pulls the rear part of the top seat 3 to sink through the first connecting members 4, and the front part of the top seat 3 moves backward. The fifth connecting shaft 85 supports inner wall of the sliding holes 33. The fifth connecting shaft 85 gradually approaches the front part of the top seat 3, and the front part of the top seat 3 gradually tilts upward. During the sinking process of a rear part of the first connecting members 4, since the tailstock 2 rotates with the third connecting shaft 83 as the rotation center, the tailstock 2 drives a second connecting shaft 82 to rotate around the third connecting shaft 83, and since the first connecting members 4 and toothed plates 6 are connected by outer tooth meshing, the toothed plates 6 can rotate the first connecting members 4 with the second connecting shaft 82 as the rotation center through outer teeth, thereby increasing the sinking speed of the rear part of the top seat 3.

The reset process of the tailstock 2 is as follows: The spring 71 pulls a sixth connecting shaft 86, so that the sixth connecting shaft 86 pulls a front end of the tailstock 2 to swing downward. The tailstock 2 rotates with the third connecting shaft 83 as the rotation center. The rear part of the tailstock 2 drives the second connecting shaft 82 and the first connecting members 4 to swing upward. Since the first connecting members 4 and the toothed plates 6 are connected by outer tooth meshing, during the process of the second connecting shaft 82 rotating around the third connecting shaft 83, the first connecting members 4 rotate with the second connecting shaft 82 as the rotation center and increase the speed at which the rear part of the top seat 3 tilts upward. The first connecting shaft 81 pushes the rear part of the top seat 3 to tilt upward, and the front part of the top seat 3 sinks and slides on the fifth connecting shaft 85 until the tray is reset.

In the description of the specification, descriptions with reference to the terms "one embodiment", "some embodiments", "example", "specific example", or "some examples" mean that specific features, structures, materials or characteristics described in combination with the embodiment or example are contained in at least one embodiment or example of the present disclosure. In the specification, the schematic expressions of the above terms do not necessarily refer to the same embodiments or examples. Moreover, the specific features, structures, materials, or characteristics described may be combined in any one or more embodiments or examples in a suitable manner.

Although the embodiments of the present disclosure have been shown and described above, it is understood that these embodiments are exemplary and should not be construed as limiting the present disclosure. Those skilled in the art may make changes, modifications, replacements, and variations to the above embodiments within the scope of the present disclosure without departing from its principles and spirit.

## Claims

1. A tray having a seat-back linkage function, comprising a base (1) for installing chair legs, a tailstock (2) for installing a back, and a top seat (3) for installing a seat, wherein the tray further comprises first connecting members (4) and toothed plates (6), wherein a side surface of each of the toothed plates (6) is provided with outer teeth protruding therefrom, and the outer teeth on each of the toothed plates (6) are arranged in a fan shape; and a side surface of each of the first connecting members (4) is provided with outer teeth, and the outer teeth on each of the first connecting member (4) are arranged in a fan shape;
the tailstock (2) and the base (1) are located below the top seat (3); the first connecting members (4) are hingedly connected to the top seat (3) through a first connecting shaft (81); the first connecting members (4) are hingedly connected to the tailstock (2) through a second connecting shaft (82); the tailstock (2) is hingedly connected to the base (1) through a third connecting shaft (83); a front part of the base (1) is movably connected to a front part of the top seat (3); the toothed plates (6) are fixedly connected or integrally formed on the base (1); and the outer teeth of the toothed plates (6) are meshed with the outer teeth of the first connecting members (4);
a central axis of the outer teeth arranged in a fan shape on each of the toothed plates (6) coincides with an axis of the third connecting shaft (83), and a central axis of the outer teeth arranged in a fan shape on each of the first connecting members (4) coincides with an axis of the second connecting shaft (82); and
when a rear part of the tailstock (2) swings downward, the tailstock (2) drives the second connecting shaft (82) to swing downward around the third connecting shaft (83), and the second connecting shaft (82) pulls a rear part of the top seat (3) to sink through the first connecting members (4), wherein, since the first connecting members (4) and the toothed plates (6) are connected by tooth meshing, the first connecting members (4) rotate around the second connecting shaft (82), and the first connecting members (4) drive the tailstock (2) to move through the first connecting shaft (81).

2. The tray having a seat-back linkage function according to claim 1, wherein the two first connecting members (4) are respectively arranged on two sides of the base (1), and the two first connecting members (4) are arranged on the same first connecting shaft (81).

3. The tray having a seat-back linkage function according to claim 1, wherein the two toothed plates (6) are respectively arranged on the two sides of the base (1), and the two toothed plates (6) are arranged on the same third connecting shaft (83) and fixedly connected to the base (1).

4. The tray having a seat-back linkage function according to claim 1, wherein the toothed plates (6) are arranged on a front side of the first connecting members (4).

5. The tray having a seat-back linkage function according to claim 1, further comprising a second connecting member (5), wherein the second connecting member (5) is located at a front side of each of the first connecting members (4) and the tailstock (2); a lower end of the second connecting member (5) is hingedly connected to the base (1) through a fourth connecting shaft (84); and an upper end of the second connecting member (5) is hingedly connected to the top seat (3) through a fifth connecting shaft (85).

6. The tray having a seat-back linkage function according to claim 1, wherein a sliding hole (33) is provided on the top seat (3); a fifth connecting shaft (85) is installed on the base (1); and the fifth connecting shaft (85) passes through the sliding hole (33) and can move within the sliding hole (33).

7. The tray having a seat-back linkage function according to claim 1, wherein a limit shaft (87) is installed on the base (1), and the limit shaft (87) is located below a front part of the tailstock (2).

8. The tray having a seat-back linkage function according to claim 1, further comprising an elastic member (7), wherein two ends of the elastic member (7) are respectively connected to two of the base (1), the top seat (3), and the tailstock (2).

9. The tray having a seat-back linkage function according to claim 1, wherein the elastic member (7) comprises a spring (71).

10. A chair, comprising the tray having a seat-back linkage function according to any one of claims 1 to 9.
